# EUROPÄISCHE PATENTANMELDUNG

(11) **EP 1 061 690 A2**
(43) Veröffentlichungstag der Anmeldung: **20.12.2000**
(21) Anmeldenummer: 00440135.2
(22) Anmeldetag: 09.05.2000
(51) Int. Cl.: H04L 5/02

(54) **Verfahren zum Ubertragen auf mehreren Trägersignalen**

(30) Priorität: 15.06.1999 DE 19927090
(71) Anmelder: ALCATEL, 75008 Paris (FR)
(72) Erfinder: Wannenmacher, Dr. Stefan, 75395 Ostelsheim (DE)
(74) Vertreter: Menzietti, Domenico, Dipl.-Ing

(57) **Zusammenfassung**

Das Verfahren ist dadurch gekennzeichnet, daß die zu übertragenden analogen Informationssignale zunächst in mindestens einer Sendeeinrichtung, z.B. der Sendeeinrichtung eines Endgerät einer Endstelle 12, 13, 14 oder der Zentrale 1, QAM oder QPSK moduliert werden, wobei mindestens zwei Träger für die Übertragung verwendet werden. Die modulierten Signale werden über ein Übertragungsnetz, z.B. ein interaktives Kommunikationsnetz für Fernsehsignale, Service-on-demand, Internet und Telefonie, zu mindestens einer Sende-/Empfangseinrichtung, z,B. einer optischen Netzabschlußeinheit 9, 10, 11 übertragen, in der sie mittels eines Analog/Digital Umsetzers digitalisiert werden. Die digitalisierten Signale werden anschließend über das Übertragungsnetz zu einer Empfangseinrichtung übertragen, z.B. die Empfangseinrichtung der Zentrale 1 oder eines Endgerätes einer Endstelle 12, 13, 14. In dieser Empfangseinrichtung werden sie gleichzeitig mindestens zwei digitalen Demodulationseinheiten, z.B. Bestandteil der Demodulationseinrichtung 4, zugeführt, wobei jede Demodulationseinheit geeignet ist, für einen Träger aus dem empfangenen Signal eine digitale QAM bzw. QPSK Demodulation durchzuführen. Die Digitalisierung der modulierten Signale kann anstelle in der Sende-/Empfangseinrichtung auch in der Empfangseinrichtung vor der Demodulation erfolgen.

## Beschreibung

Die Erfindung bezieht sich auf ein Verfahren zum Übertragen von analogen Informationssignalen und eine Empfangseinrichtung eines Übertragungsnetzes.

In Übertragungsnetzen werden Informationen von einem Sender zu einem Empfänger (Punkt-zu-Punkt), von einem Sender zu mehreren Empfängern (Punkt-zu-Mehrpunkt) oder auch von mehreren Sendern zu einem Empfänger (Mehrpunkt-zu-Punkt) übertragen. Ein Beispiel für ein Punkt-zu-Mehrpunkt Netz ist ein Kabelfernsehverteilnetz. Von einer Sendestation werden analoge Fernsehsignale im Broadcast-Verfahren zu einer Vielzahl von Endstellen übertragen. Verteilnetze, und insbesondere Kabelfernsehvertelnetze werden oftmals durch Implementierung eines Rückkanals zu interaktiven Kommunikationsnetzen ausgebaut. Der Rückkanal stellt ein Beispiel für ein Mehrpunkt-zu-Punkt Netz dar, da alle Endstellen über diesen Rückkanal die Zentrale des Kommunikationsnetzes über einen gemeinsamen Zugang erreichen können.

In EP 0 840 470 A2 ist eine optische Netzabschlußeinheit eines hybriden Glasfaser-Koaxialkabel-Zugangsnetzes, das einem Vorwärtskanal und einen Rückkanal aufweist, beschrieben. In der Netzabschlußeinheit, die als Schnittstelle zwischen dem optischen und dem elektrischen Teilnetz dient, werden die von den Endstellen ausgesandten analogen Signale digitalisiert.

Für die Strecke zwischen der optischen Netzabschlußeinheit und der Zentrale erfolgt die Übertragung digital. In der Zentrale werden die empfangenen digitalen Signale entweder digital mittels eines Digitalen Signalprozessors oder nach Rückumsetzung in analoge Signale analog weiterverarbeitet. Die Art der Modulation der analogen Signale ist offengehalten.

Aufgabe der Erfindung ist daher ein Verfahren zum Übertragen von analogen Informationssignalen, die insbesondere QAM oder QPSK moduliert sind, bereitzustellen; QAM=Quadratur Amplituden Modulation, QPSK= Quadratur Phase Shift Keying.

Gelöst wird diese Aufgabe durch ein Verfahren gemäß Patentanspruchs 1 und eine Empfangseinrichtung gemäß Patentanspruch 9.

QAM oder QPSK modulierte analoge Signale werden von einer oder mehr Sendeeinrichtungen unter Verwendung von mindestens zwei Trägern zu einer Empfangseinrichtung übertragen. In der Empfangseinrichtung oder bereits auf dem Übertragungsnetz werden die modulierten Signale digitalisiert. In der Empfangseinrichtung kann eine Demodulation auf drei verschiedene Arten und Weisen erfolgen. In einer ersten Variante werden die empfangenen Signale einer vorbestimmten Gruppe von Sendeeinrichtungen einer vorgegebenen Anzahl von Demodulationseinheiten zugeführt, wobei die Anzahl der Anzahl der Träger entspricht. Jede Demodulationseinheit wählt jeweils einen Träger aus und demoduliert auf digitalem Wege die modulierten Signale des ausgewählten Trägers. In einer zweiten Variante werden die von mehreren vorbestimmten Gruppen von Sendeeinrichtungen empfangenen Signale einer Matrix zugeführt. Die Matrix übernimmt die Aufgabe, die Signale den einzelnen Demodulationseinheiten zur digitalen Demodulation zuzuführen. In einer dritten Variante werden wie bei der zweiten Variante eine Matrix und mehrere Demodulationseinheiten verwendet, mit dem Unterschied, daß die Demodulation nach einer Digital/Analog Umsetzung analog mittels analogen Demodulatoren durchgeführt wird. Die Erfindung ist von der Form und der Topologie des Übertragungsnetzes unabhängig. So kann die Erfindung z.B. auch auf ein Punkt-zu-Punkt, ein Punkt-zu-Mehrpunkt oder ein Mehrpunkt-zu-Punkt Netz angewendet werden. Vorteilhaft ist die Anwendung auf den Rückkanal eines interaktiven Kommunikationsnetzes, da beispielsweise auch Kabeltelefoniesignale unter minimalen Störeinflüssen übertragen werden können. Auch ist die Herstellung einer Demodulationseinrichtung in einer Zentrale des Kommunikationsnetzes durch eine System-on-Chip Lösung auf einem einzigen Chip integrierbar und somit besonders kostengünstig und besonders gut gegen äußere Störeinflüsse geschützt.

Vorteilhafte Ausgestaltungen der Erfindung sind den abhängigen Ansprüchen zu entnehmen.

Im folgenden werden drei Ausführungsbeispiele der Erfindung unter Zuhilfenahme von drei Figuren beschrieben. Es zeigen:
- Fig. 1: eine schematische Darstellung eines interaktiven Kommunikationsnetzes,
- Fig. 2: einen schematisch dargestellten Aufbau einer erfindungsgemäßen Demodulationseinrichtung aus Fig.1,
- Fig. 3: eine erfindungsgemäße Ausgestaltung einer Demodulationseinheit der Demodulationseinrichtung aus Fig. 2,
- Fig. 4: einen schematisch dargestellten Aufbau einer weiteren erfindungsgemäßen Demodulationseinrichtung aus Fig. 1 und
- Fig. 5: einen schematisch dargestellten Aufbau einer weiteren erfindungsgemäßen Demodulationseinrichtung aus Fig. 1.

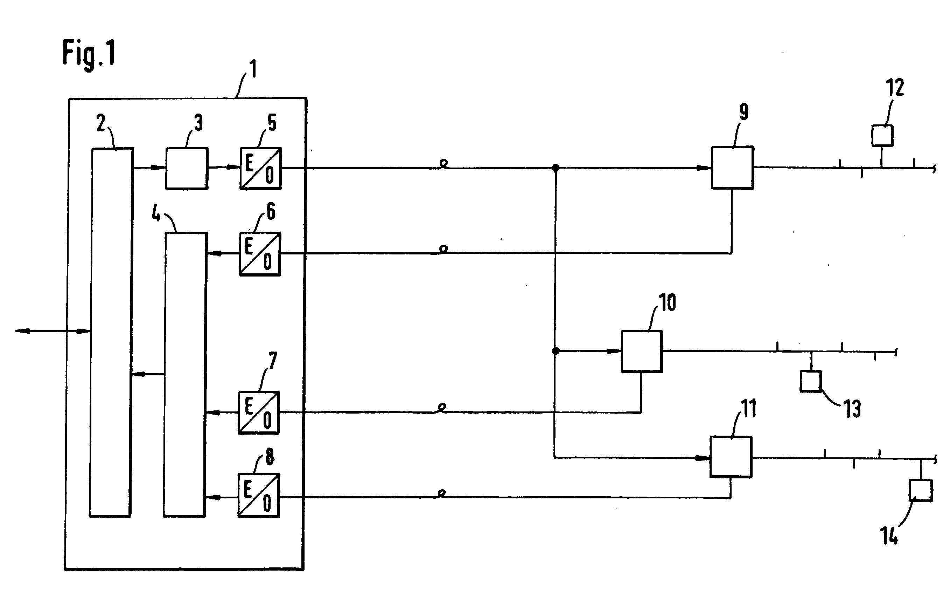

Das erste Ausführungsbeispiel wird nun unter Zuhilfenahme der Figuren 1 bis 3 erläutert. Fig. 1 zeigt ein interaktives Kommunikationsnetz. Das Kommunikationsnetz beinhaltet eine Zentrale 1, die zur Implementierung eines Vorwärtskanals über ein Punkt-zu-Mehrpunkt Netz aus optischen Glasfaserleitungen und optischen Splittern mit drei optischen Netzabschlußeinheiten 9, 10, 11 verbunden ist. Die optischen Netzabschlußeinheiten 9, 10, 11 sind ihrerseits zur Implementierung eines Rückkanals jeweils über eine optische Glasfaserleitung mit der Zentrale 1 verbunden. Anstelle einer Punkt-zu-Punkt Verbindung kann auch ein Mehrpunkt-zu-Punkt Netz von den Netzabschlußeinheiten 9, 10, 11 zur Zentrale 1 verwendet werden. Dieses Mehrpunkt-zu-Punkt Netz kann auch das Punkt-zu-Mehrpunkt Netz zur Implementierung des Vorwärtskanals sein. Dann werden z.B. für den Vorwärts- und den Rückkanal unterschiedliche Wellenlängen verwendet.

Die optischen Netzabschlußeinheiten 9, 10, 11 sind des weiteren jeweils über ein oder mehrere Koaxialkabelnetze mit Endstellen verbunden, von denen drei 12, 13, 14 beispielhaft dargestellt sind. Reale Netze beinhalten beispielsweise zehn Netzabschlußeinheiten und zehntausend Endstellen.

Die Zentrale 1 hat eine Verarbeitungseinrichtung 2, die beispielsweise als Digitaler Signalprozessor oder Mikroprozessor plus Speicher, Register, etc. ausgebildet ist. Die Verarbeitungseinrichtung 2 hat eine oder mehr Schnittstellen zu Einrichtungen außerhalb des interaktiven Netzes, z.B. einer Fernsehstation zum Zugang zu Fernsehsignalen, einem Internet Service-Provider zum Zugang zum Internet, einer Vermittlungsstelle zum Zugang zu einem Telefonnetz, etc. Die Zentrale 1 überträgt Verteilsignale, z.B. Fernsehsignale und teilnehmerindividuelle Signale, z.B. Telefonsignale oder Internetsignale über die optischen Netzabschlußeinheiten zu den Endstellen. Die zu übertragenden Signale werden in einer Modulationseinrichtung 3 moduliert, z.B. mittels QAM, anschließend in einem Elektrisch/Optisch Umsetzer in optische Signale umgesetzt und zu den optischen Netzabschlußeinheiten 9, 10, 11 übertragen. In den optischen Netzabschlußeinheiten findet eine optisch/elektrische Umsetzung und ggf. eine Verstärkung sowie Entzerrung, etc. vor der Weiterleitung zu den Endstellen 12, 13, 14 statt. In den Endstellen 12, 13, 14 werden die empfangenen Signale vor oder nach der Demodulation zu den entsprechenden Endgeräten, z.B. Fernseher, Telefon, Computer weitergeleitet. Die Endstellen 12, 13, 14 ihrerseits übertragen QAM oder QPSK modulierte Informationssignale über das jeweilige Koaxialkabelnetz zu der jeweiligen optischen Netzabschlußeinheit 9, 10, 11, die vor der Weiterleitung an die Zentrale 1 eine elektrisch/optische Umsetzung und ggf. eine Verstärkung, Entzerrung, Kollisionserkennung, etc. durchführt. Die Informationssignale beinhalten beispielsweise Abrufsignale für Service-on-demand oder Internet Anwendungen und/oder Telefonsignale. Der Zugriff der Endstellen 12, 13, 14 auf den Rückkanal ist beispielsweise durch TDMA, FDMA oder CDMA geregelt; TDMA = Time Division Multiple Access, FDMA = Frequency Division Multiple Access, CDMA = Code Division Multiple Access.

In der Zentrale 1 werden die von den drei optischen Netzabschlußeinheiten 9, 10, 11 empfangenen Signale in drei Optisch/Elektrisch Umsetzern 6, 7, 8 in elektrische Signale umgesetzt und anschließend einer Demodulationseinrichtung 4 zugeführt. In der Demodulationseinrichtung findet die Demodulation der empfangenen Signale statt. Die demodulierten Signale werden zur weiteren Verarbeitung der Verarbeitungseinrichtung 2 zugeführt.

Im folgenden wird ein Verfahren zum Übertragen von analogen Informationssignalen beschrieben. Das Verfahren ist dadurch gekennzeichnet, daß die zu übertragenden analogen Informationssignale zunächst in mindestens einer Sendeeinrichtung, z.B. der Sendeeinrichtung eines Endgerät einer Endstelle 12, 13, 14 oder der Zentrale 1, QAM oder QPSK moduliert werden, wobei mindestens zwei Träger für die Übertragung verwendet werden. Die modulierten Signale werden über ein Übertragungsnetz, z.B. das interaktive Kommunikationsnetz, zu mindestens einer Sende-/Empfangseinrichtung, z.B. einer optischen Netzabschlußeinheit 9, 10, 11 übertragen, in der sie mittels eines Analog/Digital Umsetzers digitalisiert werden. Die digitalisierten Signale werden anschließend über das Übertragungsnetz zu einer Empfangseinrichtung übertragen, z.B. die Empfangseinrichtung der Zentrale 1 oder eines Endgerätes einer Endstelle 12, 13, 14. In dieser Empfangseinrichtung werden sie gleichzeitig mindestens zwei digitalen Demodulationseinheiten, z.B. Bestandteil der Demodulationseinrichtung 4, zugeführt, wobei jede Demodulationseinheit geeignet ist, für einen Träger aus dem empfangenen Signal eine digitale QAM bzw. QPSK Demodulation durchzuführen. Die Digitalisierung der modulierten Signale kann anstelle in der Sende-/Empfangseinrichtung auch in der Empfangseinrichtung vor der Demodulation erfolgen.

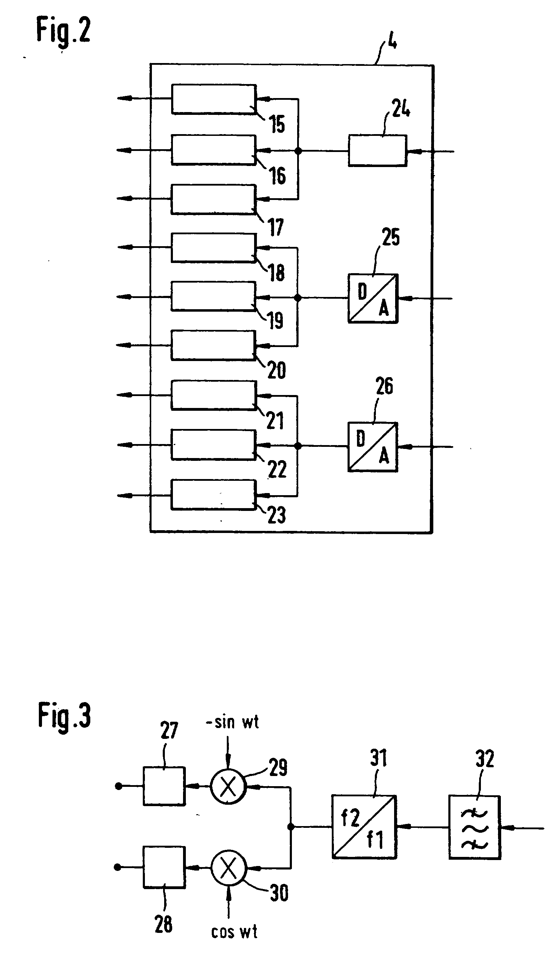

Das erste Ausführungsbeispiel wird nun weiter unter Zuhilfenahme der Figur 2 erläutert. Fig. 2 zeigt eine erfindungsgemäße Ausgestaltung der Demodulationseinrichtung 4 aus Fig.1. Die Demodulationseinrichtung 4 beinhaltet neun Demodulationseinheiten 15, 16, 17, 18, 19, 20, 21 , 22, 23 und drei Analog/Digital Umsetzer 24, 25, 26.

In allen drei Ausführungsbeispielen werden beispielhaft für jede optische Netzabschlußeinheit 9, 10, 11 drei Träger zur Übertragung der modulierten Signale verwendet. Jede Demodulationseinheit 15, 16, 17, 18, 19, 20, 21, 22, 23 ist geeignet modulierte Signale eines Trägers digital zu demodulieren. Zur Demodulation werden Gruppen zu je drei Demodulationseinheiten 15, 16, 17; 18, 19, 20; 21, 22, 23 gebildet, die jeweils die Demodulation aller über eine optische Netzabschlußeinheit 9, 10, 11 übertragenen modulierten Signale durchführen; jede Demodulationseinheit 15, 16, 17; 18, 19, 20; 21, 22, 23 einer Gruppe für einen Träger.

Jeder Gruppe ist ein Analog/Digital Umsetzer 24, 25, 26 vorgeschaltet zur Umsetzung der QAM oder QPSK modulierten Signale. Sofern die Digitalisierung bereits auf dem Netz stattgefunden hat, z.B. in einer optischen Netzabschlußeinheit 9, 10, 11 oder gar in den Endstellen 12, 13, 14 selbst, werden die Analog/Digital Umsetzer 24, 25, 26, nicht benötigt. Werden die modulierten Signale bereits in einem Endgerät oder im Übergabepunkt der Endstelle 12, 13, 14 digitalisiert, so ist ggf. ein Multiplexer in der entsprechenden optischen Netzabschlußeinheit 9, 10, 11 notwendig.

In einer Empfangseinrichtung eines Übertragungsnetzes, das zur Übertragung von QAM oder QPSK modulierten Signalen, die auf mindestens zwei unterschiedlichen Trägern übertragen werden, dient, sind somit mindestens zwei Demodulationseinheiten 15-23 vorgesehen, die jeweils geeignet sind, für einen Träger aus dem empfangenen Signal eine digitale QAM bzw. QPSK Demodulation durchzuführen.

Das erste Ausführungsbeispiel wird nun weiter unter Zuhilfenahme der Figur 3 erläutert. Fig. 3 zeigt eine erfindungsgemäße Ausgestaltung der Demodulationseinheit 15 aus Fig. 2.

Die Demodulationseinheit 15 beinhaltet ein digitales Bandpaßfilter 32 zum Herausfiltern eines Trägers, einen dem Bandpaßfilter 32 nachgeschalteten Abtastratenwandler 31 und zwei dem Abtastratenwandler 31 parallel nachgeschaltete Pfade, wobei jeder Pfad einen Multiplizierer 29, 30 und ein Tiefpaßfilter 27, 28 beinhaltet. In dem einen Pfad erfolgt eine Multiplikation mit -sin ωt, in dem anderen Pfad eine Multiplikation mit cos ωt.

Das Bandpaßfilter 32 ist ein digitales Filter, das beispielsweise mit 16 Bit arbeitet. Der Abtastratenwandler 31, der auch als Downsampler oder Decimationfilter bezeichnet wird, führt eine Frequenzumsetzung durch. Die empfangenen Signale mit der Frequenz f1 werden in Signale mit der Frequenz f2 umgesetzt, wobei f1 >f2 ist. Es findet eine Frequenzumsetzung in einen Frequenzbereich statt, der für die anschließende Multiplikation besser geeignet ist. Jedes Tiefpaßfilter 27, 28 ist beispielsweise als Matched Filter ausgeführt. Am Ausgang des Tiefpaßfilters 27 steht die Phasenkomponente des QAM bzw. QPSK Signals zur Verfügung, am Ausgang des Tiefpaßfilters 28 die Quadraturkomponente.

Alle Demodulationseinheiten 15 bis 23 sind gleich aufgebaut mit dem Unterschied, daß in jeder Gruppe jeweils drei Demodulationseinheiten mit drei verschiedenen Durchgangsbereichen ihrer Bandpaßfilter vorhanden sind, um die drei unterschiedlichen Träger zu verarbeiten.

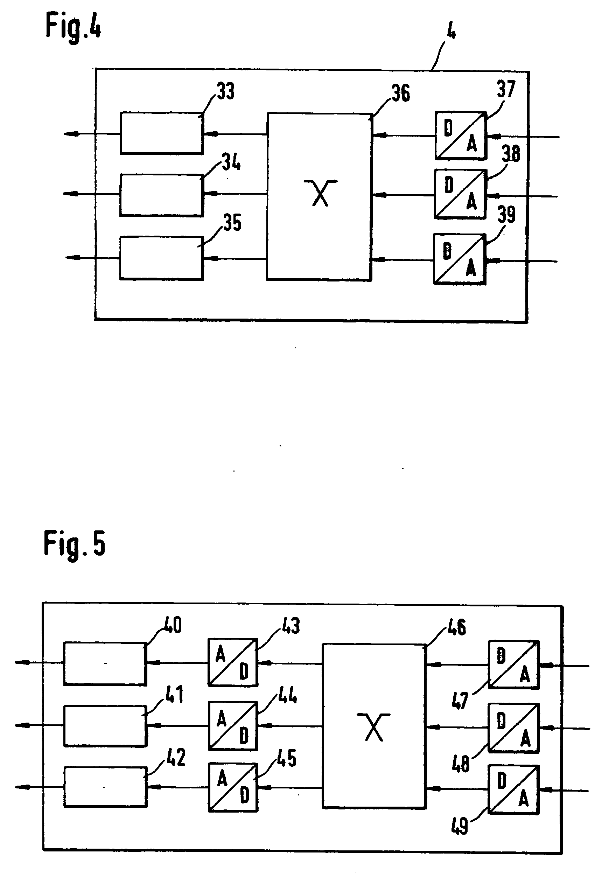

Das zweite Ausführungsbeispiel wird nun unter Zuhilfenahme der Figur 4 erläutert. Fig. 4 zeigt eine erfindungsgemäße Ausgestaltung der Demodulationseinrichtung 4 aus Fig.1. Die Demodulationseinrichtung 4 beinhaltet drei Demodulationseinheiten 33, 34, 35, eine Matrix 36 und drei Analog/Digital Umsetzer 37, 38, 39.

Die in der Demodulationseinrichtung 4 empfangenen Signale werden den Demodulationseinheiten 33-35 nicht gleichzeitig zugeführt, sondern durchlaufen zunächst eine Matrix 36, in der sie nach den Trägern aufgeteilt werden. Die aufgeteilten Träger werden dann anschließend den einzelnen Demodulationseinheiten 33-35 zur direkten digitalen Demodulation zugeführt.

Die Matrix 36 dient zur Aufteilung nach Trägern, beinhaltet drei Eingänge, die jeweils mit einem Analog/Digital Umsetzer 37, 38, 39 verbunden sind, und drei Ausgänge, die jeweils mit einer einzelnen digitalen QAM bzw. QPSK Demodulationseinheit 33-35 zur anschließenden digitalen Demodulation verbunden sind. Die Aufteilung nach Trägern und die Zuordnung zu den einzelnen Demodulationseinheiten erfolgt abhängig vom Zugriffsverfahren z.B. nach vorgegebenen Zeitschlitzen beim TDMA oder nach vorgegebenen Frequenzbereichen beim FDMA. Die Matrix ist beispielsweise als sog. Cross Connect ausgebildet. Bei einem Cross Connect kann jeder Eingang auf jeden Ausgang geschaltet werden.

Der Aufbau der Demodulationseinheiten 33-35 entspricht beispielsweise dem Aufbau der Demodulationseinheiten 15-23 aus Fig. 2 und 3 mit dem Unterschied, daß kein Bandpaßfilter benötigt wird, da die Auswahl des Trägers ja bereits in der Matrix erfolgt. Im Vergleich zum ersten Ausführungsbeispiel werden nur drei statt neun Demodulationseinheiten benötigt.

Das dritte Ausführungsbeispiel wird nun unter Zuhilfenahme der Figur 5 erläutert. Fig. 5 zeigt eine erfindungsgemäße Ausgestaltung der Demodulationseinrichtung 4 aus Fig.1. Die Demodulationseinrichtung 4 beinhaltet drei Demodulatoren 40, 41, 42, drei Digital/Analog Umsetzer 43, 44, 45, eine Matrix 46 und drei Analog/Digital Umsetzer 47, 48, 49.

Aufbau und Funktionsweise der Matrix 46 und der Analog/Digital Umsetzer 47, 48, 49 entspricht der Matrix 36 und den Analog/Digital Umsetzern 37, 38, 39 aus Fig. 4. Zur Demodulation werden anstelle der digitalen Demodulationseinheiten 33-35 aus Fig. 4 drei übliche analoge QAM bzw. QPSK Demodulatoren 40, 41, 42 mit vorgeschalteten Digital/Analog Umsetzern 43, 44, 45 verwendet.

In allen drei Ausführungsbeispielen kann in der Sende/Empfangseinrichtung, z.B. einer optischen Netzabschlußeinheit, nach der Digitalisierung eine Multiplexbildung von Signalen mehrerer Sendeeinrichtungen durchgeführt werden. Die gemultiplexten Signale werden zur Empfangseinrichtung, z.B. Zentrale, übertragen. In der Empfangseinrichtung des ersten Ausführungsbeispiels wird vor der Demodulation eine Demultiplexbildung durchgeführt und die demultiplexten Signale werden jeweils einer Gruppe von Demodulationseinheiten zugeführt. In der Matrix der Empfangseinrichtung des zweiten und dritten Ausführungsbeispiels erfolgt die Aufteilung nach Trägern und die Demultiplexbildung in einem Schritt. Die Matrix wird dazu entsprechend programmiert.

Anstelle der QAM oder QPSK Modulation können auch andere Modulationsarten verwendet werden, z.B. PSK, etc. Im Netz sind dann aber dennoch mindestens zwei Träger vorgesehen; sog. subcarrier multiplex. Dabei ist unerheblich, ob einzelne Sendeeinrichtungen jeweils nur modulierte Signale auf einem Träger aussenden und das gesamte Netz aber durch verschiedene Sendeeinrichtungen mit verschiedenen Trägern insgesamt mindestens zwei Träger beinhaltet oder Sendeeinrichtungen vorgesehen sind, die modulierte Signale auf verschiedenen Trägern aussenden. Die einzelnen Träger können beispielsweise für die Bereitstellung unterschiedlicher Dienste reserviert sein, z.B. Kabeltelefonie, Internet, Service-on-demand, etc.

## Patentansprüche

1. Verfahren zum Übertragen von analogen Informationssignalen,
**dadurch gekennzeichnet,** daß die analogen Informationssignale in mindestens einer Sendeeinrichtung QAM oder QPSK moduliert werden, wobei mindestens zwei Träger für die Übertragung verwendet werden, daß die modulierten Signale über ein Übertragungsnetz zu einer Sende-/Empfangseinrichtung übertragen werden, in der sie mittels eines Analog/Digital Umsetzers digitalisiert werden, daß die digitalisierten Signale über das Übertragungsnetz zu einer Empfangseinrichtung übertragen werden, in der sie gleichzeitig mindestens zwei digitalen Demodulationseinheiten (15-23, 33-35, 40-45) zugeführt werden, wobei jede Demodulationseinheit (15-23, 33-35, 40-45) geeignet ist, für einen Träger aus dem empfangenen Signal eine digitale QAM bzw. QPSK Demodulation durchzuführen.

2. Verfahren nach Anspruch 1, dadurch gekennzeichnet, daß die Digitalisierung der modulierten Signale anstelle in der Sende/Empfangseinrichtung in der Empfangseinrichtung vor der Demodulation erfolgt.

3. Verfahren nach Anspruch 1 oder 2 , dadurch gekennzeichnet, daß die in der Empfangseinrichtung empfangenen Signale den Demodulationseinheiten (15-23, 33-35, 40-45) nicht gleichzeitig zugeführt werden, sondern zunächst eine Matrix (36, 46) durchlaufen, in der sie nach den Trägern aufgeteilt werden und die aufgeteilten Träger dann anschließend einzelnen Demodulationseinheiten (33-35, 40-45) zur direkten digitalen Demodulation zugeführt werden.

4. Verfahren nach Anspruch 3, dadurch gekennzeichnet, daß die digitale Demodulation durch Digital/Analog Umsetzung (43-45) und anschließender analoger Demodulation mittels analogen QAM bzw. QPSK Demodulatoren (40-42) erfolgt.

5. Verfahren nach Anspruch 1, dadurch gekennzeichnet, daß die modulierten Signale über den Rückkanal eines interaktiven Kommunikationsnetzes übertragen werden.

6. Verfahren nach Anspruch 5, dadurch gekennzeichnet, daß als Sendeeinrichtung die Sendeeinrichtung einer Endstelle (12-14), als Sende/Empfangseinrichtung die Sende-/Empfangseinrichtung einer optische Netzabschlußeinrichtung (9-11) und als Empfangseinrichtung die Empfangseinrichtung einer Zentrale (1) des Kommunikationsnetzes verwendet wird.

7. Verfahren nach Anspruch 1, dadurch gekennzeichnet, daß in der Sende/Empfangseinrichtung nach der Digitalisierung eine Multiplexbildung von Signalen mehrerer Sendeeinrichtungen durchgeführt wird, daß die gemultiplexten Signale zur Empfangseinrichtung übertragen werden, und daß in der Empfangseinrichtung vor der Demodulation eine Demultiplexbildung durchgeführt und die demultiplexten Signale jeweils einer Gruppe von Demodulationseinheiten zugeführt werden.

8. Verfahren nach Anspruch 3, dadurch gekennzeichnet, daß in der Sende/Empfangseinrichtung nach der Digitalisierung eine Multiplexbildung von Signalen mehrerer Sendeeinrichtungen durchgeführt wird, daß die gemultiplexten Signale zur Empfangseinrichtung übertragen werden, und daß in der Matrix der Empfangseinrichtung die Aufteilung nach Trägern und die Demultiplexbildung in einem Schritt erfolgen.

9. Empfangseinrichtung eines Übertragungsnetzes, **dadurch gekennzeichnet,** daß das Übertragungsnetz zur Übertragung von QAM oder QPSK modulierten Signalen, die auf mindestens zwei unterschiedlichen Trägern übertragen werden, dient, und daß die Empfangseinrichtung mindestens zwei Demodulationseinheiten (15-23, 33-35, 40-45) beinhaltet, die jeweils geeignet sind, für einen Träger aus dem empfangenen Signal eine digitale QAM bzw. QPSK Demodulation durchzuführen.

10. Empfangseinrichtung nach Anspruch 9, dadurch gekennzeichnet, daß jede Demodulationseinheit (15-23, 33-35, 40-45) ein digitales Bandpaßfilter (32) zum Herausfiltern eines Trägers, einen dem Bandpaßfilter (32) nachgeschalteten Abtastratenwandler (31) und zwei dem Abtastratenwandler (31) parallel nachgeschaltete Pfade beinhaltet, wobei jeder Pfad einen Multiplizierer (29, 30) und ein Tiefpaßfilter (27, 28) beinhaltet, und daß in dem einen Pfad eine Multiplikation mit -sin ωt und in dem anderen Pfad eine Multiplikation mit cos ωt erfolgt.

11. Empfangseinrichtung nach Anspruch 9, dadurch gekennzeichnet, daß die Empfangseinrichtung eine Matrix (36, 46) zur Aufteilung nach Trägern beinhaltet, und jeder Ausgang der Matrix (36, 46) mit einer einzelnen digitalen QAM bzw. QPSK Demodulationseinheit (33-35, 40-45) zur anschließenden digitalen Demodulation verbunden ist.

12. Empfangseinrichtung nach Anspruch 9, dadurch gekennzeichnet, daß den Demodulationseinheiten (15-23, 33-35, 40-45) mindestens ein Analog/Digital Umsetzer (24-26, 37-39, 47-49) vorgeschaltet ist.
